# EUROPEAN PATENT SPECIFICATION

(11) **EP 3 527 355 B1**
(45) Date of publication and mention of the grant of the patent: **08.09.2021**
(21) Application number: 18212545.0
(22) Date of filing: 14.12.2018
(51) Int. Cl.: B29C 65/06, B29C 65/08, B29C 65/16, B29K 101/12

(54) **WELDING RIB STRUCTURE**
SCHWEISSRIPPENSTRUKTUR
STRUCTURE DE NERVURE DE SOUDAGE

(30) Priority: 14.02.2018 JP 2018024555
(43) Date of publication of application: 21.08.2019
(73) Proprietor: Toyota Boshoku Kabushiki Kaisha, Kariya-shi, Aichi 448-8651 (JP)
(72) Inventor: OHASHI, Junichi, Kariya-shi, Aichi 448-8651 (JP); SAITO, Yasuhiro, Kariya-shi, Aichi 448-8651 (JP)
(74) Representative: TBK

(56) References cited:
- JP-A- 2009 002 220

## Description

The present invention relates to a welding rib structure according to the preamble of claim 1, the features of which are disclosed in document JP 2009 002220 A, and more particularly to a welding rib structure provided in at least one of a first resin member and a second resin member which are welded to each other.

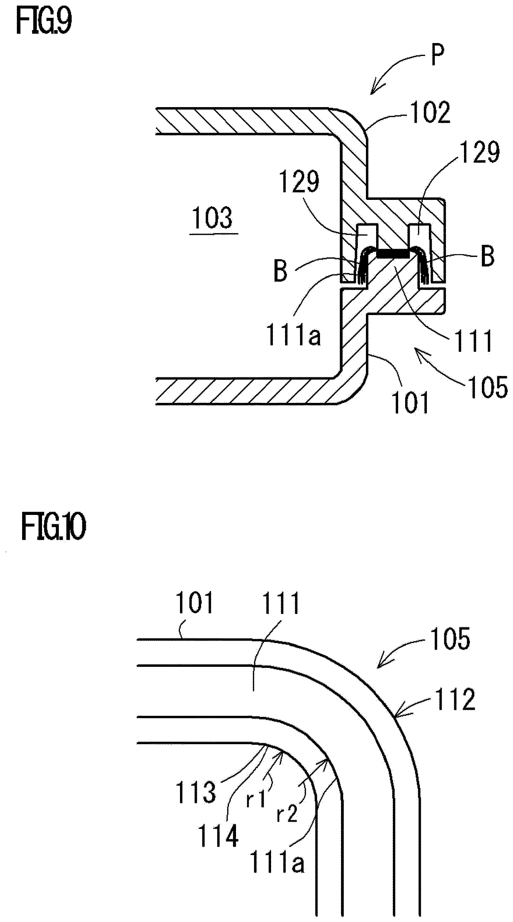

As a conventional resin product, for example, as shown in FIG. 9, there is generally known a resin product P including a first resin member 101 and a second resin member 102 that is welded to the first resin member 101 and forms an internal space 103 between the first resin member 101 and the second resin member 102 itself (see, for example, JP H05-177712 A and the like). A welding rib structure 105 of the resin member 101 has a welding rib 111 which is raised on the welded end side of the resin member 101 along the shape thereof. For example, as shown in FIG. 10, the resin member 101 has, on its welded end side, a corner portion 112 curved in a planar direction. At this corner portion 112, an inner wall 111a of the welding rib 111 is formed in an arc shape having a curvature radius r2 (for example, 7 mm) larger than a curvature radius r1 (for example, 5 mm) of an arc 114 forming an inner surface 113 on the welded end side of the resin member 101.

Here, in the above-described welding rib structure 105, a welding burr B tends to be generated locally inside the welding rib 101 intensively at the corner portion 112 on the welded end side of the resin member 101 at the time of vibration welding (see FIG. 9). In the above-described welding rib structure 105, however, at the corner portion 112, the inner wall 111a of the welding rib 111 is formed in an arc shape having the curvature radius r2 larger than the curvature radius r1 of the arc 114 forming the inner surface 113 on the welded end side of the resin member 101 so that it is impossible to secure a large volume of a burr pool space 129 located inside the welding rib 111. Therefore, there is a fear that the welding burr B generated inside the welding rib 111 will protrude into the internal space 103.

In order to solve the above-mentioned problem, it is conceivable to secure a large volume of the burr pool space 129 located inside the welding rib 111 by setting the inner wall 111a of the welding rib 111 so as to have an arc-shaped surface shape having a comparatively small curvature radius at the corner portion 112 on the welded end side of the resin member 101. However, in this case, at the comer portion 112, stress concentration tends to occur inside the welding rib 111, and the pressure resistance strength of the resin product P lowers.

Incidentally, JP H05-177712 A discloses a configuration in which the resin member has the corner portion on its welded end side in the vibration welding of the resin member (see FIG. 10). However, JP H05-177712 A nowhere discloses local and intensive generation of the welding burr inside the welding rib at the corner portion at the time of vibration welding or a means for solving this problem.

The present invention has been made in view of the above actual situation, and it is the object of the present invention to provide a welding rib structure that can suppress protrusion of a welding burr generated inside a welding rib into an internal space and can secure the pressure resistance strength necessary for a resin product.

The object of the invention is achieved by a welding structure according to claim 1. Advantageous embodiments are carried out according to the dependent claims.

According to the invention, a welding rib structure is provided in at least one of a first resin member and a second resin member which are welded to each other, wherein a welding rib is raised on the welded end side of the resin member along the shape thereof, wherein the resin member has, on its welded end side, a corner portion curved in a planar direction, and wherein, at the corner portion, an inner wall of the welding rib is formed in an arc shape having a curvature radius smaller than a curvature radius of an arc forming an inner surface located on the welded end side of the resin member and has a convex portion protruding toward the inside of the corner portion.

A flange may be provided on the welded end side of the resin member so as to project outward, and the welding rib may be raised at an intermediate portion in a projecting direction on the flange.

The convex portion may be arranged at a central portion in an arc direction of the inner wall of the welding rib.

The convex portion may be provided over a height direction of the rising of the inner wall of the welding rib.

The convex portion may be formed in a semi-cylindrical shape.

The leading end side of the rising of the welding rib may be formed in a tapered shape.

An inclined surface whose height from the base end of the rising of the welding rib increases from the inside of the welding rib toward the outside thereof may be formed on the leading end side of the rising of the welding rib.

At the corner portion, the convex portion may be arranged outside an imaginary arc which is concentric with the arc forming the inner surface located on the welded end side of the resin member and has a curvature radius larger than the curvature radius of the arc.

According to the welding rib structure of the present embodiment, the welding rib is raised on the welded end side of the resin member along the shape thereof. The resin member has, on its welded end side, the corner portion curved in a planar direction. At the corner portion, the inner wall of the welding rib is formed in an arc shape having a curvature radius smaller than a curvature radius of the arc forming the inner surface located on the welded end side of the resin member, and has the convex portion protruding toward the inside of the corner portion. Thus, at the corner portion on the welded end side of the resin member, a large volume of the burr pool space located inside the welding rib can be secured, and the rigidity of the welding rib is increased. Therefore, protrusion of the welding burr generated inside the welding rib into the internal space can be suppressed, and the pressure resistance strength necessary for the resin product can be secured.

In addition, in the case where the flange is provided on the welded end side of the resin member so as to project outward, and the welding rib is raised at the intermediate portion in the projecting direction on the flange, the volume of the burr pool space located inside the welding rib can be further increased, and the rigidity of the welding rib is further enhanced.

Further, in the case where the convex portion is arranged at the central portion in the arc direction of the inner wall of the welding rib, the volume of the burr pool space located inside the welding rib can be further increased, and the rigidity of the welding rib is further enhanced.

In addition, in the case where the convex portion is provided over the height direction of the rising of the inner wall of the welding rib, the volume of the burr pool space located inside the welding rib can be further increased, and the rigidity of the welding rib is further enhanced.

In addition, when the convex portion is formed in a semi-cylindrical shape, the volume of the burr pool space located inside the welding rib can be further increased, and the rigidity of the welding rib is further enhanced.

Furthermore, in the case where the leading end side of the rising of the welding rib is formed in a tapered shape, the amount of the welding burr generated at the beginning of welding of the resin members is suppressed. Therefore, it is possible to more reliably suppress the protrusion of the welding burr into the internal space.

In addition, in the case where the specific inclined surface is formed on the leading end side of the rising of the welding rib, the amount of the welding burr generated inside the welding rib at the beginning of welding of the resin members is suppressed.

Further, in the case where the convex portion is arranged outside a specific imaginary arc at the corner portion, the volume of the burr pool space located inside the welding rib can be further increased, and the rigidity of the welding rib is further enhanced.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
FIG. 1 is a vertical cross-sectional view of a main part of a resin product according to an Example;
FIG. 2 is an exploded perspective view of the resin product;
FIG. 3 is a plan view of a main part of a first welding rib structure of a first resin member according to the Example;
FIG. 4 is a plan view of a main part of a second welding rib structure of a second resin member according to the Example;
FIG. 5 is a vertical cross-sectional view of the first welding rib structure of the first resin member, in which (a) is a cross-sectional view taken along line a-a in FIG. 3, and (b) is a cross-sectional view taken along line b-b in FIG. 3;
FIG. 6 is a vertical cross-sectional view of the second welding rib structure of the second resin member, in which (a) is a cross-sectional view taken along line a-a in FIG. 4, and (b) is a cross-sectional view taken along the line b-b in FIG. 4;
FIG. 7 is an explanatory view for explaining a welding rib structure according to another embodiment, in which (a) shows a form in which the leading end side of a welding rib of a first welding rib structure is formed in a tapered shape, and (b) shows a form in which the leading end side of a welding rib of a second welding rib structure is formed in a tapered shape;
FIG. 8 is a plan view of a main part of a welding rib structure according to still another embodiment;
FIG. 9 is a vertical cross-sectional view of a main part of a conventional resin product; and
FIG. 10 is a plan view of a main part of a welding rib structure of a conventional resin member.

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

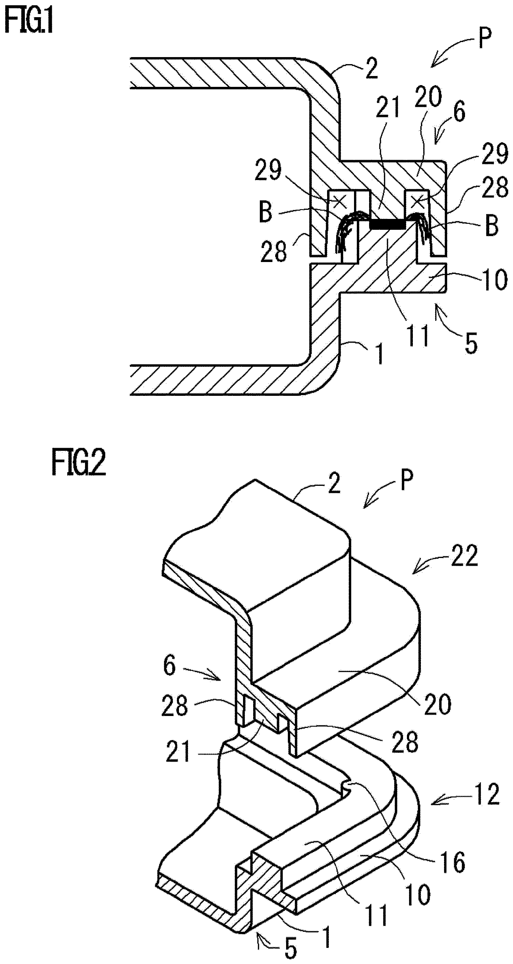

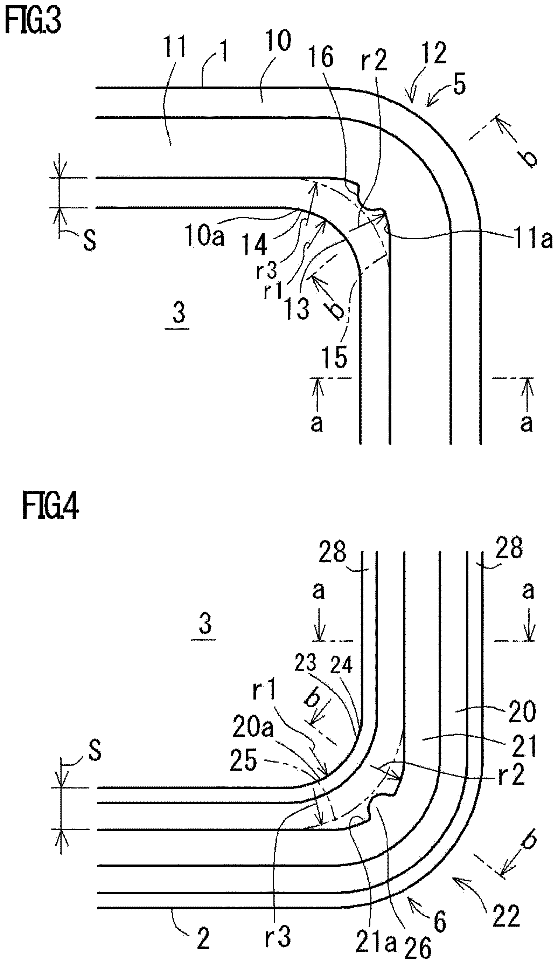

A welding rib structure (i.e. a rib structure for welding) according to the present embodiment is a welding rib structure (5, 6) provided in at least one of a first resin member (1) and a second resin member (2) which are welded to each other. On the welded end side of the resin member (1, 2), a welding rib (11, 21) is raised along the shape thereof (see, for example, FIGS. 1 and 2). The resin member (1, 2) has, on its welded end side, a corner portion (12, 22) curved in a planar direction. At the corner portion (12, 22), an inner wall (11a, 21a) of the welding rib is formed in an arc shape having a curvature radius (r2) smaller than a curvature radius (r1) of an arc (14, 24) forming an inner surface (13, 23) on the welded end side of the resin member (1, 2), and has a convex portion (16, 26) protruding toward the inside of the corner portion (see, for example, FIGS. 3 and 4).

As the welding rib structure according to the present embodiment, for example, there is indicated a form in which a flange (10, 20) is provided on the welded end side of the resin member (1, 2) so as to project outward and the welding rib (11, 21) is raised at an intermediate portion in a projecting direction on the flange (for example, see FIGS. 3 and 4).

As the welding rib structure according to the present embodiment, for example, there is indicated a form in which the convex portion (16, 26) is arranged at a central portion in an arc direction of the inner wall (11a, 21a) of the welding rib (for example, see FIGS. 3 and 4).

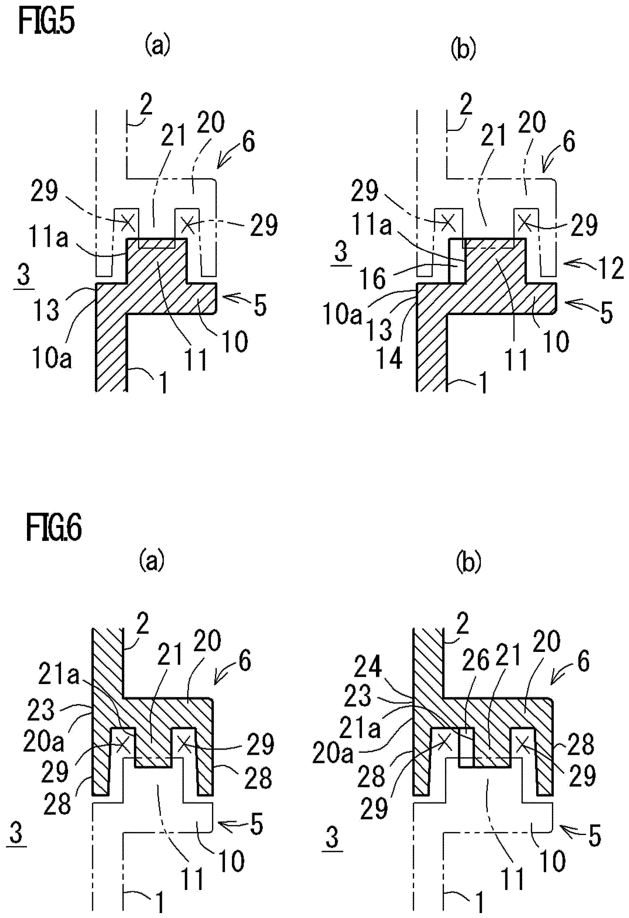

As the welding rib structure according to the present embodiment, for example, there is indicated a form in which the convex portion (16, 26) is provided over a height direction of the rising of the inner wall (11a, 21a) of the welding rib (for example, see FIGS. 5 and 6).

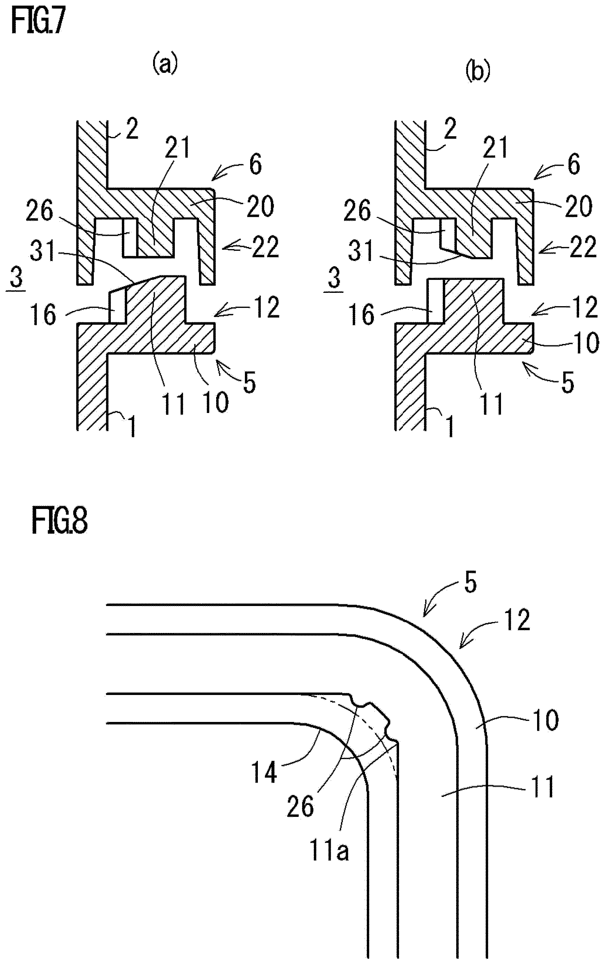

As the welding rib structure according to the present embodiment, for example, there is indicated a form in which the rising end side of the welding rib (11, 21) is formed in a tapered shape (see, for example, FIG. 7).

Note that reference numerals in parentheses attached to the respective components described in the above embodiment indicate correspondence relationships with specific components referred to in the Examples that will be described later.

### EXAMPLES

Hereinafter, the present invention will be described in detail by way of Examples with reference to the accompanying drawings.

### (1) Resin product

As shown in FIGS. 1 and 2, a resin product P according to the present Example includes a first resin member 1 and a second resin member 2 that is welded to the first resin member 1 and forms an internal space 3 between the first resin member 1 and the second resin member 2 itself. The first and second resin members 1 and 2 are each formed in the shape of a case having an opening. Further, the internal space 3 is used as a flow path space where a fluid flows. The first resin member 1 is provided with a first welding rib structure 5, and the second resin member 2 is provided with a second welding rib structure 6.

### (2) Configuration of welding rib structure

In the first welding rib structure 5 according to the present Example, as shown in FIGS. 1 and 2, a welding rib 11 is raised on the welded end side of the first resin member 1 along the shape thereof. Specifically, on the welded end side of the first resin member 1, a flange 10 is provided so as to project outward, and the welding rib 11 is arranged at an intermediate portion in a projecting direction on the flange 10. The first resin member 1 has, on its welded end side, a corner portion 12 curved in a planar direction.

As shown in FIGS. 3 and 5(b), at the corner portion 12, an inner wall 11a of the welding rib 11 is formed in an arc shape having a curvature radius r2 (for example, 4 mm) smaller than a curvature radius r1 (for example, 5 mm) of an arc forming an inner surface 13 located on the welded end side of the first resin member 1 (that is, an inner wall 10a of the flange 10). Further, at the corner portion 12, a semi-cylindrical convex portion 16 protruding toward the inside of the corner portion 12 (that is, toward the internal space 3) is formed on the inner wall 11a of the welding rib 11. The convex portion 16 is arranged at a central portion in an arc direction of the inner wall 11a of the welding rib 11. Further, the convex portion 16 is provided over a height direction of the rising of the inner wall 11 a of the welding rib 11.

In the second welding rib structure 6 according to the present Example, as shown in FIGS. 1 and 2, a welding rib 21 is raised on the welded end side of the second resin member 2 along the shape thereof. Specifically, on the welded end side of the second resin member 2, a flange 20 is provided so as to project outward, and the welding rib 21 is arranged at an intermediate portion in a projecting direction on the flange 20. Furthermore, a standing wall 28 is provided on the flange 20 along its inner and outer edges, respectively. The standing walls 28 form a burr pool space 29 between the inner and the outer walls of each of the welding ribs 11 and 21. Furthermore, the second resin member 2 has, on its welded end side, a corner portion 22 curved in a planar direction.

As shown in FIGS. 4 and 6(b), at the corner portion 22, an inner wall 21a of the welding rib 21 is formed in an arc shape having a curvature radius r2 (for example, 4.8 mm) smaller than a curvature radius r1 (for example, 5 mm) of an arc 24 forming an inner surface 23 on the welded end side of the second resin member 2 (that is, an inner wall 20a of the flange 20). Further, at the corner portion 22, a semi-cylindrical protrusion 26 protruding toward the inside of the corner portion 22 (that is, toward the internal space 3) is formed on the inner wall 21a of the welding rib 21. The convex portion 26 is arranged at a central portion in an arc direction of the inner wall 21 a of the welding rib 21. Further, the convex portion 26 is provided over a height direction of the rising of the inner wall 21a of the welding rib 21.

In the above-described first and second welding rib structures 5 and 6, as shown in FIGS. 3 and 4, at the corner portions 12 and 22 of the resin members 1 and 2, the burr pool spaces 29 formed inside the inner walls 11a and 21a of the welding ribs 11 and 21 each have a larger volume by the amount of the space surrounded by the inner wall 11a, 21a of the welding rib 11, 21 and an imaginary arc 15, 25, as compared with the conventional welding rib structure 105 (see FIG. 10). The virtual arc 15 is concentric with an arc 14 forming the inner surface 13 on the welded end side of the first resin member 1, and has a curvature radius r3 (for example, 7 mm) larger than the curvature radius r1 (for example, 5 mm) of the arc 14. The virtual arc 25 is concentric with an arc 24 forming the inner surface 23 on the welded end side of the second resin member 2, and has a curvature radius r3 (for example, 7.8 mm) larger than the curvature radius r1 (for example, 5 mm) of the arc 24. Furthermore, the convex portion 16, 26 is arranged outside the imaginary arc 15, 25 at the corner portion 12, 22.

### (3) Action of welding rib structure

Next, the operation of the welding rib structures 5 and 6 having the above structure will be described. In a state where the welded end side of the first resin member 1 and the welded end side of the second resin member 2 are caused to abut against each other and pressurized, the first and second resin members 1 and 2 are relatively vibrated in a direction perpendicular to the pressurization. As a result, the first resin member 1 and the second resin member 2 are integrated by vibration welding, so that a resin product P is obtained.

At the time of the vibration welding described above, the leading end sides of the welding ribs 11 and 21 are melted so that a welding burr B is generated. Particularly, at the corner portions 12 and 22 on the welded end sides of the resin members 1 and 2, the welding burr B is generated locally inside the welding ribs 11 and 21 intensively. However, in the first and second welding rib structures 5 and 6 of the present Example, at the corner portions 12 and 22 on the welded end sides of the resin members 1 and 2, the burr pool spaces 29 located inside the welding ribs 11 and 21 are set so as to have a relatively large volume. Therefore, the welding burr B is accumulated in the burr pool spaces 29 and does not enter the internal space 3 (see FIG. 1).

### (4) Effect of Example

According to the welding rib structure 5, 6 of the present Example, the welding rib 11, 21 is raised on the welded end side of the resin member 1, 2 along the shape thereof, and the resin member 1, 2 has, on its welded end, the corner portion 12, 22 curved in a planar direction. At the corner portion 12, 22, the inner wall 11a, 21a of the welding rib 11, 21 is formed in an arc shape having the curvature radius r2 smaller than the curvature radius r1 of the arc 14, 24 forming the inner surface 13, 23 on the welded end side of the resin member 1, 2, and has the convex portion 16, 26 protruding toward the inside of the corner portion 12, 22. As a result, at the corner portion 12, 22 on the welded end side of the resin member 1, 2, a large volume of the burr pool space 29 inside the welding rib 11, 21 can be secured, and the rigidity of the welding rib 11, 21 is enhanced. Therefore, protrusion of the welding burr B generated inside the welding rib 11, 21 into the internal space 3 can be suppressed, and the pressure resistance strength necessary for the resin product P can be secured.

In the present Example, the flange 10, 20 is provided on the welded end side of the resin member 1, 2 so as to project outward, and the welding rib 11, 21 is raised at the intermediate portion in the projecting direction on the flange 10, 20. As a result, the volume of the burr pool space 29 inside the welding rib 11, 21 can be further increased, and the rigidity of the welding rib 11, 21 is further enhanced.

Further, in the present Example, the convex portion 16, 26 is arranged at the central portion in the arc direction of the inner wall 11 a, 21 a of the welding rib 11, 21. As a result, the volume of the burr pool space 29 inside the welding rib 11, 21 can be further increased, and the rigidity of the welding rib 11, 21 is further enhanced.

Further, in the present Example, the convex portion 16, 26 is provided over the height direction of the rising of the inner wall 11a, 21a of the welding rib 11, 21. As a result, the volume of the burr pool space 29 inside the welding rib 11, 21 can be further increased, and the rigidity of the welding rib 11, 21 is further enhanced.

Further, in the present Example, the convex portion 16, 26 is arranged outside the imaginary arc 15,25 which is concentric with the arc 14, 24 forming the inner surface 13, 23 located on the welded end side of the resin member 1, 2 and has the curvature r3 larger than the curvature radius r1 of the arc 14, 24 (specifically, a value obtained by adding a distance S between the inner surface in a straight portion on the welded end side of the resin member 1, 2 and the inner wall of the welding rib 11, 21 to the curvature radius r1; see FIGS. 3 and 4). As a result, the volume of the burr pool space 29 inside the welding rib 11, 21 can be further increased, and the rigidity of the welding rib 11, 21 is further enhanced.

The present invention is not limited to the above-described Example, and can be variously modified within the scope of the present invention depending on the purpose and use. That is, in the above Example, the rising end side of the welding rib 11, 21 is formed so as to have a substantially constant width, but the present invention is not limited thereto. For example, as shown in FIG. 7, the rising end side of the welding rib 11, 21 may be formed in a tapered shape. As a result, the amount of the welding burr B generated at the beginning of welding of the resin member 1, 2 is suppressed. Therefore, it is possible to more reliably suppress the protrusion of the welding burr B into the internal space 3. In this case, for example, an inclined surface 31 in which the distance from the surface of the flange 10, 20 becomes larger from the inside toward the outside can be formed on the rising end side of the welding rib 11, 21.

In the above Example, the form in which the flange 10, 20 with the welding rib 11, 21 erected is provided on the welded end side of the resin member 1, 2 has been exemplified, but the present invention is not limited thereto. For example, the welding rib 11, 21 may be erected directly on the welded end side of the resin member 1, 2 without the flange 10, 20.

In the above Example, the single convex portion 16, 26 is provided on the inner wall 11a, 21a of the welding rib 11,21, but the present invention is not limited thereto. For example, as shown in FIG. 8, two or more convex portions 16, 26 may be provided on the inner wall 11a, 21a of the welding ribs 11, 21. In the above Example, the convex portion 16, 26 having a substantially semicircular cross section has been exemplified, but the present invention is not limited thereto. For example, the convex portion 16, 26 may have a substantially polygonal cross section (for example, triangular and rectangular).

In the above Example, the welding ribs 11 and 21 are provided on the welded end sides of the first and second resin members 1 and 2, respectively, but the present invention is not limited thereto. For example, the ribs 11 and 21 may be provided on one of the welded end sides of the first and second resin members 1 and 2, and may not be provided on the other welded end side.

In the above Example, the resin product P formed by integrating the two resin members 1 and 2 through vibration welding has been exemplified, but the present invention is not limited thereto. For example, the resin product P may be formed by integrating the two resin members 1 and 2 through ultrasonic welding, laser welding, or the like.

Further, the use, shape, size, and the like of the resin product P in the above Example are not particularly limited. Examples of the resin product include a fluid supply pipe, an intake manifold, and various filters.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, without departing from the scope of the present invention in its aspects. Although the present invention has been described herein with reference to particular structures, materials and embodiments, the present invention is not intended to be limited to the particulars disclosed herein; rather, the present invention is defined by the scope of the appended claims.

The present invention is not limited to the above-described embodiments, and various variations and modifications may be possible without departing from the scope of the present invention.

The present invention is widely used as a technique for appropriately welding (particularly vibration-welding) the first resin member and the second resin member to obtain a resin product.

## Claims

1. A welding rib structure (5, 6) provided in at least one of a first resin member (1) and a second resin member (2) which are welded to each other,
wherein a welding rib (11, 21) is raised on the welded end side of the resin member (1, 2) along the shape thereof,
wherein the resin member (1, 2) has, on its welded end side, a corner portion (12, 22) curved in a planar direction, and
**characterized in that**
at the corner portion (12, 22), an inner wall (11a, 21a) of the welding rib (11, 21) is formed in an arc shape having a curvature radius (r2) smaller than a curvature radius (r1) of an arc (14, 24) forming an inner surface (13, 23) located on the welded end side of the resin member (1, 2) and has a convex portion (16, 26) protruding toward the inside of the corner portion (12, 22).

2. The welding rib structure (5,6) according to claim 1,
wherein a flange (10, 20) is provided on the welded end side of the resin member (1, 2) so as to project outward, and
wherein the welding rib (11, 21) is raised at an intermediate portion in a projecting direction on the flange (10, 20).

3. The welding rib structure (5, 6) according to claim 1 or 2, wherein the convex portion (16, 26) is arranged at a central portion in an arc direction of the inner wall (11a, 21a) of the welding rib (11, 21).

4. The welding rib structure (5, 6) according to any one of claims 1 to 3, wherein the convex portion (16, 26) is provided over a height direction of the rising of the inner wall (11a, 21a) of the welding rib (11, 21).

5. The welding rib structure (5, 6) according to any one of claims 1 to 4, wherein the convex portion (16, 26) is formed in a semi-cylindrical shape.

6. The welding rib structure (5, 6) according to any one of claims 1 to 5, wherein the leading end side of the rising of the welding rib (11, 12) is formed in a tapered shape.

7. The welding rib structure (5, 6) according to claim 6, wherein an inclined surface (31) whose height from the base end of the rising of the welding rib (11, 21) increases from the inside of the welding rib (11, 21) toward the outside thereof is formed on the leading end side of the rising of the welding rib (11, 21).

8. The welding rib structure (5, 6) according to any one of claims 1 to 7, wherein, at the corner portion (12, 22), the convex portion (16, 26) is arranged outside an imaginary arc (15, 25) which is concentric with the arc (14, 24) forming the inner surface (13, 23) located on the welded end side of the resin member (1, 2) and has a curvature radius (r3) larger than the curvature radius (r1) of the arc (14, 24).

## Patentansprüche

1. Schweißrippenstruktur (5, 6), die in mindestens einem von einem ersten Harzelement (1) und einem zweiten Harzelement (2), die miteinander verschweißt sind, vorgesehen ist,
wobei eine Schweißrippe (11, 21) an der geschweißten Endseite des Harzelements (1, 2) entlang der Form desselben erhöht ausgebildet ist,
wobei das Harzelement (1, 2) an seiner geschweißten Endseite einen in einer ebenen Richtung gekrümmten Eckabschnitt (12, 22) aufweist, und
**dadurch gekennzeichnet, dass**
an dem Eckabschnitt (12, 22) eine Innenwand (11a, 21a) der Schweißrippe (11, 21) in einer Bogenform ausgebildet ist, die einen Krümmungsradius (r2) aufweist, der kleiner als ein Krümmungsradius (r1) eines Bogens (14, 24) ist, der eine Innenfläche (13, 23) bildet, die an der geschweißten Endseite des Harzelements (1, 2) angeordnet ist, und einen konvexen Abschnitt (16, 26) aufweist, der in Richtung der Innenseite des Eckabschnitts (12, 22) vorsteht.

2. Schweißrippenstruktur (5, 6) nach Anspruch 1,
wobei ein Flansch (10, 20) an der geschweißten Endseite des Harzelements (1, 2) so vorgesehen ist, dass er nach außen vorsteht, und
wobei die Schweißrippe (11, 21) an einem Zwischenabschnitt in einer Vorsteh-Richtung auf dem Flansch (10, 20) erhöht ist.

3. Schweißrippenstruktur (5, 6) nach Anspruch 1 oder 2, wobei der konvexe Abschnitt (16, 26) an einem zentralen Abschnitt in einer Bogenrichtung der Innenwand (11a, 21a) der Schweißrippe (11, 21) angeordnet ist.

4. Schweißrippenstruktur (5, 6) nach einem der Ansprüche 1 bis 3, wobei der konvexe Abschnitt (16, 26) über eine Höhenrichtung der Erhöhung der Innenwand (11a, 21a) der Schweißrippe (11, 21) vorgesehen ist.

5. Schweißrippenstruktur (5, 6) nach einem der Ansprüche 1 bis 4, wobei der konvexe Abschnitt (16, 26) in einer halbzylindrischen Form ausgebildet ist.

6. Die Schweißrippenstruktur (5, 6) nach einem der Ansprüche 1 bis 5, wobei die führende Endseite des Anstiegs der Schweißrippe (11, 12) in einer abgeschrägten Form ausgebildet ist.

7. Schweißrippenstruktur (5, 6) nach Anspruch 6, wobei an der vorderen Stirnseite der Erhöhung der Schweißrippe (11, 21) eine schräge Fläche (31) ausgebildet ist, deren Höhe vom Basisende der Erhöhung der Schweißrippe (11, 21) von der Innenseite der Schweißrippe (11, 21) zu deren Außenseite hin ansteigt.

8. Schweißrippenstruktur (5, 6) nach einem der Ansprüche 1 bis 7, wobei der konvexe Abschnitt (16, 26) an dem Eckabschnitt (12, 22) außerhalb eines imaginären Bogens (15, 25) angeordnet ist, der konzentrisch zu dem die Innenfläche (13, 23) bildenden Bogen (14, 24) ist, der sich auf der geschweißten Endseite des Harzelements (1, 2) befindet und einen Krümmungsradius (r3) aufweist, der größer ist als der Krümmungsradius (r1) des Bogens (14, 24).

## Revendications

1. Structure de nervure de soudage (5, 6) prévue dans au moins l'un parmi un premier élément en résine (1) et un second élément en résine (2) qui sont soudés entre eux,
dans laquelle une nervure de soudage (11, 21) est levée sur le côté de l'extrémité soudée de l'élément en résine (1, 2) le long de sa forme,
dans laquelle l'élément en résine (1, 2) a, sur son côté d'extrémité soudée, une partie de coin (12, 22) incurvée dans une direction planaire, et
**caractérisée en ce que** :
au niveau de la partie de coin (12, 22), une paroi interne (11a, 21a) de la nervure de soudage (11, 21) est formée selon une forme d'arc ayant un rayon de courbure (r2) inférieur à un rayon de courbure (r1) d'un arc (14, 24) formant une surface interne (13, 23) positionnée sur le côté d'extrémité soudée de l'élément en résine (1, 2) et a une partie convexe (16, 26) faisant saillie vers l'intérieur de la partie de coin (12, 22).

2. Structure de nervure de soudage (5, 6) selon la revendication 1,
dans laquelle une bride (10, 20) est prévue sur le côté d'extrémité soudée de l'élément en résine (1, 2) afin de faire saillie vers l'extérieur, et
dans lequel la nervure de soudage (11, 21) est soulevée au niveau d'une partie intermédiaire dans une direction de saillie sur la bride (10, 20).

3. Structure de nervure de soudage (5, 6) selon la revendication 1 ou 2, dans laquelle la partie convexe (16, 26) est agencée au niveau d'une partie centrale dans une direction d'arc de la paroi interne (11a, 21a) de la nervure de soudage (11, 21) .

4. Structure de nervure de soudage (5, 6) selon l'une quelconque des revendications 1 à 3, dans laquelle la partie convexe (16, 26) est prévue sur une direction de hauteur du soulèvement de la paroi interne (11a, 21a) de la nervure de soudage (11, 21).

5. Structure de nervure de soudage (5, 6) selon l'une quelconque des revendications 1 à 4, dans laquelle la partie convexe (16, 26) est formée selon une forme semi-cylindrique.

6. Structure de nervure de soudage (5, 6) selon l'une quelconque des revendications 1 à 5, dans laquelle le côté de l'extrémité d'attaque du soulèvement de la nervure de soudage (11, 12) est formé selon une forme progressivement rétrécie.

7. Structure de nervure de soudage (5, 6) selon la revendication 6, dans laquelle une surface inclinée (31) dont la hauteur à partir de l'extrémité de base du soulèvement de la nervure de soudage (11, 21) augmente de l'intérieur de la nervure de soudage (11, 21) vers son extérieur, est formée sur un côté d'extrémité d'attaque du soulèvement de la nervure de soudage (11, 21).

8. Structure de nervure de soudage (5, 6) selon l'une quelconque des revendications 1 à 7, dans laquelle, au niveau de la partie de coin (12, 22), la partie convexe (16, 26) est agencée à l'extérieur d'un arc imaginaire (15, 25) qui est concentrique avec l'arc (14, 24) formant la surface interne (13, 23) positionnée sur le côté d'extrémité soudée de l'élément en résine (1, 2) et a un rayon de courbure (r3) supérieur au rayon de courbure (r1) de l'arc (14, 24).
